# EUROPEAN PATENT APPLICATION

(11) **EP 2 492 765 A2**
(43) Date of publication of application: **29.08.2012**
(21) Application number: 12156539.4
(22) Date of filing: 22.02.2012
(51) Int. Cl.: G05B 19/048

(54) **Extraction of a Foundation Fieldbus Device Information for Enhanced Device Selection and Data Validation**

(30) Priority: 24.02.2011 US 201113033838
(71) Applicant: General Electric Company, Schenectady, NY 12345 (US)
(72) Inventor: Banerjee, Abhik, 500081 Hyderabad (IN); Karkala, Guruprasad Vishwanath, 500081 Hyderabad (IN); Nekkar, Raghavendra Rao Perampalli, 500081 Hyderabad (IN); Somavarapu, Kiran Kumar, 500081 Hyderabad (IN)
(74) Representative: Picker, Madeline Margaret

(57) **Abstract**

A method for extracting and reporting a foundation fieldbus device description (DD) file (116) for device selection and data validation includes obtaining the DD file (116) for an intelligent field device (H1 device) (115), extracting device information from the DD file (116), reading live data generated by the H1 device (115) and generating a report (108) including compliant values and functionality of the H1 device (115).

## Description

### BACKGROUND OF THE INVENTION

The subject matter disclosed herein relates to industrial automation protocols and more particularly to systems and methods for parsing foundation fieldbus device description files for device selection and data validation.

Foundation fieldbus is a digital serial industrial automation protocol, two-way communication system that interconnects "field" equipment such as sensors and actuators. Foundation fieldbus provides integration of high-speed controllers (having host systems software) (e.g., programmable logic controllers (PLC) and distributed control system (DCS) controllers), H1 device subsystems via a linking device, data servers and workstations. An H1 device is any Intelligent Field device such as temperature transmitters, pressure transmitters, and different types of actuators, which communicate to the PLC or DCS controllers (via a linking device) through Foundation Fieldbus protocols. A linking device is an interface module between the H1 device (e.g.: sensors, actuators etc) and PLC or DCS controllers. The linking device performs various functions such as synchronizing communication between various H1 devices. A device description (DD) file is a driver file used by the Host System to communicate with the H1 devices via the controllers (PLC or DCS) and linking device. Each H1 device comes with different versions of DD files. The DD files provide various information about the H1 Device that includes, but is not limited to, the different types of blocks and their quantity, initial values and supported ranges for different parameters of the blocks menus, methods and visualization elements, block instantiation details and capability levels of the H1 device. Blocks are software that defines functionality, features and behaviors of the H1 device. Host system software reads this information from DD files provided by manufacturer for communicating with the H1 devices. DD files are typically in a binary format, from which H1 device functionality and block data can be extracted.

Currently, end users experience difficulty in determining the functionalities being provided by the H1 device, which can lead to inefficient hardware selection in the field. In addition, engineers extract DD file data to validate compliance levels of the H1 devices. The engineers rely on the extracted information displayed by the host system software to validate if the host system is compliant with the device. The engineers typically do not know if the displayed data is compliant with expected data provided by the manufacturer. As such, there can be an inconsistency with the expected data in the DD file and the displayed data.

### BRIEF DESCRIPTION OF THE INVENTION

According to one aspect of the invention, a method for extracting and reporting a foundation fieldbus device description file for device selection and data validation is described. The method can include obtaining the DD file for an intelligent field device (H1 device), extracting device information from the DD file, reading live data generated by the H1 device and generating a report including compliant values and functionality of the H1 device.

According to another aspect of the invention, a computer program product extracting and reporting a foundation fieldbus device description (DD) file for device selection and data validation is described. The computer program product can include a computer readable medium having instructions for causing a computer to implement a method, the method including obtaining the DD file for an intelligent field device (H1 device), extracting device information from the DD file, reading live data generated by the H1 device and generating a report including compliant values and functionality of the H1 device.

According to yet another aspect of the invention, a system for extracting and reporting a foundation fieldbus device description file for device selection and data validation is described. The system can include a processor configured to obtain the DD file for an intelligent field device (H1 device), extract supported and unsupported functionality of the H1 device, extract supported blocks and function parameters of the supported blocks, read live data generated by the H1 device, export the live data to an export file, generate a report including compliant values and functionality of the H1 device and compare the compliant values from the report and the live data from the export file.

These and other features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 illustrates a high level block diagram of an example system for foundation fieldbus DD files for device selection and data validation.
FIG. 2 illustrates a system for extracting device information from foundation fieldbus DD files for device selection and data validation, illustrating a generalized example controller.
FIG. 3 illustrates a flow chart of a method for extracting device information from foundation DD files for device selection and data validation in accordance with example embodiments.
FIG. 4 illustrates an example of a report format in accordance with example embodiments.

The detailed description explains embodiments of the invention, together with advantages and features, by way of example with reference to the drawings.

### DETAILED DESCRIPTION OF THE INVENTION

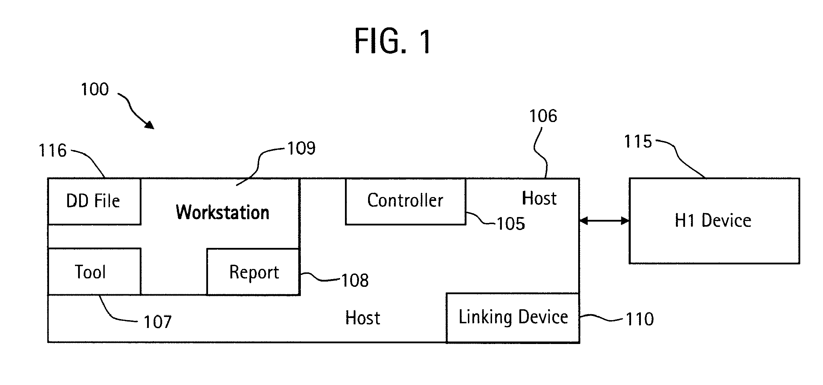

FIG. 1 illustrates a high level block diagram of an example system 100 for extracting device information from foundation fieldbus DD files for device selection and data validation. As described herein, the system 100 can include a controller 105 and Workstations. The controller 105 is coupled to a linking device 110 that provides an interface between the controller 105 and an H1 device 115. As described herein, the controller 105 can be any control hardware such as PLC and DCS controllers. The controller 105 can also be any suitable hardware controller. A tool in the host system 106 (e.g., via a workstation 109) is implemented to configure and develop application logic that is downloaded to the controller 105. In example embodiments, the host system 106 supports foundation fieldbus technology and implements an example tool 107 to generate a comprehensive report 108 to display all the foundation fieldbus features of the H1 device 115 by extracting device information from the DD file 116 and comparing the DD file values with the values of the device displayed in the host system. The DD file 116 is provided by the device manufacturer and has a series of information in a binary format which is processed by host system 106 in order to monitor and control the H1 device 115. The DD file 116 includes blocks (their types and quantity), initial values/actual values for various parameters in the blocks, their supported range, supported DD menus and methods, block Instantiation details and capability levels, and other information related to fieldbus devices as known in the art. In example embodiments described further herein the host system 106 reads this information from DD files 106 provided by manufacturer for communicating with the H1 device 115.

In example embodiments, the tool 107 can be an integral part of the host system 106 and generates the comprehensive report 108 show to the user various specific features of the system 100 including but not limited to: the link master (via the linking device 110), multiple capability levels, block instantiation, transducer blocks, standard blocks, custom blocks, profile custom function blocks, conditionals, methods, menus, visualizations, and multi-bit alerts. This information can further be compared against the extracted DD file 116 report giving the exact comparison between different H1 devices (e.g., the H1 device 115) and the host system 106.

As described herein, the report 108 can be embedded in the host system 106, which the user can use to make a comparative study of the various devices that can be procured and also have an idea of the various foundation fieldbus features that the device can support. The comprehensive report 108 includes various features that each fieldbus device (e.g., the H1 device 115) supports and the compatibility with the host system 106. The report 108 aids the user in procuring an improved fieldbus set up.

In example embodiments, data actually collected and processed from the DD file 116 in the H1 device 115 in the field can be compared to data that the host system 106 displays. When the H1 device 115 is qualified in the field, the H1 device 115 has to be compliant with the host system 106, the user depends on the value that is being displayed in the host system 106 and uses the data being displayed to control and monitor the H1 device 115. However, there may be a discrepancy between the actual data being displayed in the host system 106 from the H1 device 115, and the compliant values in the DD file 116. While data in the DD file 116 is accessible, currently it must be manually parsed to extract the data. It is a laborious process for the end user to go through various measurement devices from different manufacturers to understand various foundation fieldbus features that the measurement device supports. In example embodiments, the systems and methods described herein provide the end user with the comprehensive report 108 about the various features that the different measurement device supports and their compatibility with the host system, this will help them in procuring an improved fieldbus set up. The systems and methods described herein automatically extract the data and compare the data to actual measured values from the H1 device 115. In example embodiments, the tool 107 extracts the configuration information available in DD file 116 and information that is required for the validation and device qualification of the H1 device 115 is extracted using the tool 107 to be stored in a valid format in a specified location on the host system 106.

The comprehensive report 108 also aids the device tool 107 that helps during the device qualification and validation by directly reading the data from the DD file 116 then comparing actual values being displayed in the host system 106. During the validation of the host system 106 with respect to each of the supported field devices (e.g., the H1 device 115), the validation of the data which the H1 device 115 is currently processing is done only by viewing the values that were displayed in the host system 116 and compared against the device manual or the standard document. The tool 107 provides an option to the end user to view the value of various function parameters of the H1 device that are to be compared as against the host values measured from the H1 device 115. In example embodiments, a user can select the specific features that the user wants to use to compare the values between the DD file 116 value and the host system 106 values.

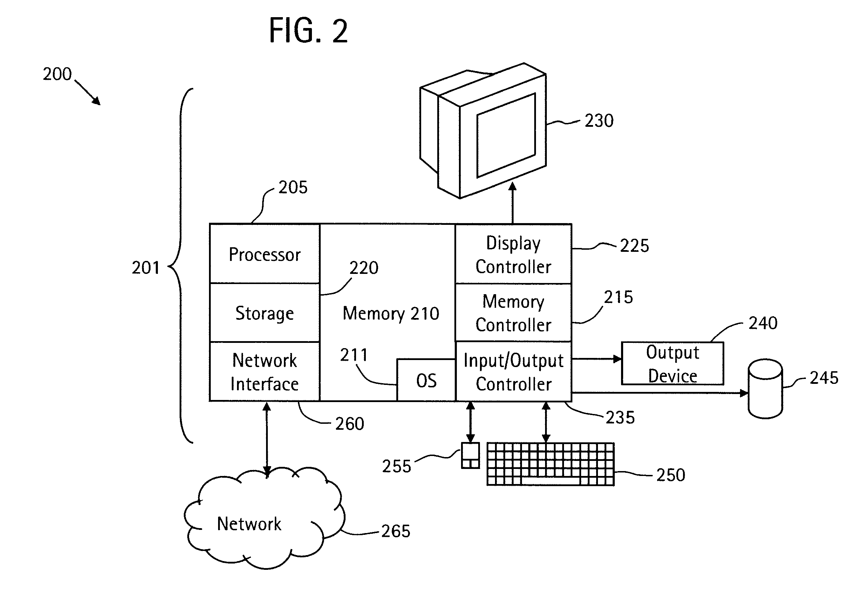

As described herein, the controller 105 can be any suitable hardware for controlling the system 100. FIG. 2 illustrates a system 200 for extracting device information from foundation fieldbus DD files for device selection and data validation, illustrating a generalized example controller. The methods described herein can be implemented in software (e.g., firmware), hardware, or a combination thereof. In example embodiments, the methods described herein are implemented in software, as an executable program, and is executed by a special or general-purpose digital computer, such as a personal computer, workstation, minicomputer, or mainframe computer. The system 200 therefore includes general-purpose computer 201.

In example embodiments, in terms of hardware architecture, as shown in FIG. 2, the computer 201 includes a processor 205, memory 210 coupled to a memory controller 215, and one or more input and/or output (I/O) devices 240, 245 (or peripherals) that are communicatively coupled via a local input/output controller 235. The input/output controller 235 can be, but is not limited to, one or more buses or other wired or wireless connections, as is known in the art. The input/output controller 235 may have additional elements, which are omitted for simplicity, such as controllers, buffers (caches), drivers, repeaters, and receivers, to enable communications. Further, the local interface may include address, control, and/or data connections to enable appropriate communications among the aforementioned components.

The processor 205 is a hardware device for executing software, particularly that stored in memory 210. The processor 205 can be any custom made or commercially available processor, a central processing unit (CPU), an auxiliary processor among several processors associated with the computer 201, a semiconductor based microprocessor (in the form of a microchip or chip set), a macroprocessor, or generally any device for executing software instructions.

The memory 210 can include any one or combination of volatile memory elements (e.g., random access memory (RAM, such as DRAM, SRAM, SDRAM, etc.)) and nonvolatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 210 may incorporate electronic, magnetic, optical, and/or other types of storage media. Note that the memory 210 can have a distributed architecture, where various components are situated remote from one another, but can be accessed by the processor 205.

The software in memory 210 may include one or more separate programs, each of which comprises an ordered listing of executable instructions for implementing logical functions. In the example of FIG. 2, the software in the memory 210 includes the extracting methods (including the tool 107 and report 108 from FIG. 1) described herein in accordance with example embodiments and a suitable operating system (OS) 211. The OS 211 essentially controls the execution of other computer programs, such the extracting systems and methods as described herein, and provides scheduling, input-output control, file and data management, memory management, and communication control and related services.

The extracting methods described herein may be in the form of a source program, executable program (object code), script, or any other entity comprising a set of instructions to be performed. When a source program, then the program needs to be translated via a compiler, assembler, interpreter, or the like, which may or may not be included within the memory 210, so as to operate properly in connection with the OS 211. Furthermore, the extracting methods can be written as an object oriented programming language, which has classes of data and methods, or a procedure programming language, which has routines, subroutines, and/or functions.

In example embodiments, a conventional keyboard 250 and mouse 255 can be coupled to the input/output controller 235. Other output devices such as the I/O devices 240, 245 may include input devices, for example but not limited to a printer, a scanner, microphone, and the like. Finally, the I/O devices 240, 245 may further include devices that communicate both inputs and outputs, for instance but not limited to, a network interface card (NIC) or modulator/demodulator (for accessing other files, devices, systems, or a network), a radio frequency (RF) or other transceiver, a telephonic interface, a bridge, a router, and the like. The I/O devices can include the linking device 110 and the H1 device 115 from FIG. 1. The system 200 can further include a display controller 225 coupled to a display 230. In example embodiments, the system 200 can further include a network interface 260 for coupling to a network 265. The network 265 can be an IP-based network for communication between the computer 201 and any external server, client and the like via a broadband connection. The network 265 transmits and receives data between the computer 201 and external systems. In example embodiments, network 265 can be a managed IP network administered by a service provider. The network 265 may be implemented in a wireless fashion, e.g., using wireless protocols and technologies, such as WiFi, WiMax, etc. The network 265 can also be a packet-switched network such as a local area network, wide area network, metropolitan area network, Internet network, or other similar type of network environment. The network 265 may be a fixed wireless network, a wireless local area network (LAN), a wireless wide area network (WAN) a personal area network (PAN), a virtual private network (VPN), intranet or other suitable network system and includes equipment for receiving and transmitting signals.

If the computer 201 is a PC, workstation, intelligent device or the like, the software in the memory 210 may further include a basic input output system (BIOS) (omitted for simplicity). The BIOS is a set of essential software routines that initialize and test hardware at startup, start the OS 211, and support the transfer of data among the hardware devices. The BIOS is stored in ROM so that the BIOS can be executed when the computer 201 is activated.

When the computer 201 is in operation, the processor 205 is configured to execute software stored within the memory 210, to communicate data to and from the memory 210, and to generally control operations of the computer 201 pursuant to the software. The extracting methods described herein and the OS 211, in whole or in part, but typically the latter, are read by the processor 205, perhaps buffered within the processor 205, and then executed.

When the systems and methods described herein are implemented in software, as is shown in FIG. 2, the methods can be stored on any computer readable medium, such as storage 220, for use by or in connection with any computer related system or method.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

In example embodiments, where the extracting methods are implemented in hardware, the extracting methods described herein can implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

In example embodiments, a user can collect various DD files and load them onto the respective controller (e.g., the controller 105). The user can also install the host system 106 on the controller to plan the foundation fieldbus devices that need to be procured (e.g., the H1 device 115). The host system 106 can read the DD file 116. Information regarding various features that are supported by the corresponding H1 device 115 is extracted. The extracted information is then consolidated in a form of the understandable report 108 (as compared with extracted binary data that is currently available), which displays the set of supported/not supported features. The end user views the report 108 to decide on if the H1 device 115 suffices any predetermined requirements. A validation team or device qualification team can also use the same report 108 to validate the host system 106 and qualify a device to be used by the user.

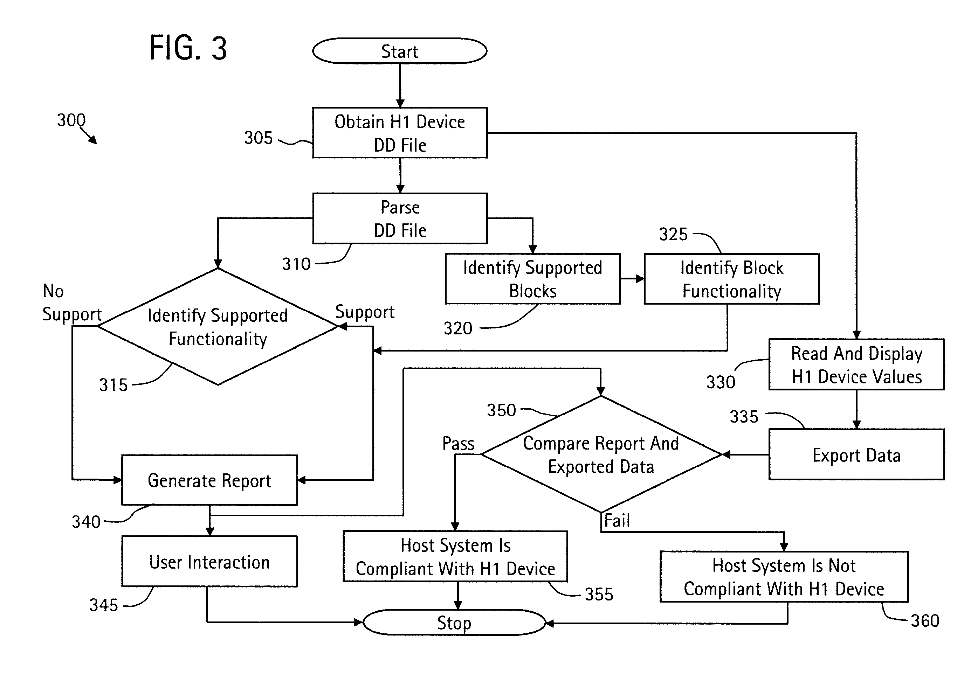

FIG. 3 illustrates a flow chart of a method 300 for extracting device information from foundation fieldbus DD files for device selection and data validation in accordance with example embodiments. At block 305, the host system 106 obtained the DD file 116 for the H1 device 115. Those skilled in the art appreciate that DD files such as DD file 115 include several versions and include various sub-files including, but not limited to .ffo, .sys, .cff, .sy5 and ff5 files. At block 310, the host system 106 extracts the binary DD file 116. The host system 106 extracts device information from the file via the extracting tool 107 and extracts the functionality and blocks supported by the H1 device 115. At block 315, the host system 106 identifies the functionality supported by the H1 device 115. As described herein, the types of functionality that the H1 device 115 can support can include but is not limited to: menus and methods, block instantiation, capability level, conditions, visualization (i.e., charts and graphs), enhanced function blocks, profiled custom block, custom blocks, multi-bit alerts and link master (via the linking device 110). At block 320, the host system 106 identifies the blocks that the H1 device 115 supports. At block 325, the host system 106 further identifies the block functionality supported by the blocks identified at block 320. Function parameters of each of the supported block can include but is not limited to initial values of each function parameter and a valid range of each function parameter. At block 330, the host system 106 further reads and displays live values from the H1 device 115. At block 335, the host system can export to live data into a file, such as an XML file. In example embodiments, as described herein, a validation team or a host qualification team can export the live data via the host system 106.

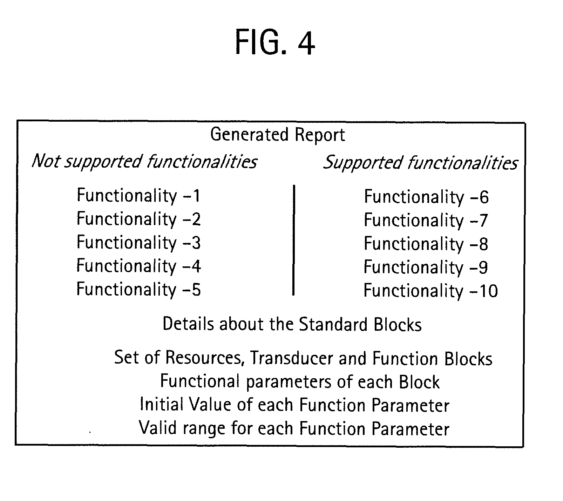

In example embodiments, as described herein, the host system 106 can further generate the report 108 at block 340. The report can include supported and unsupported functionally identified at block 315. The report 108 can further include the block functionality identified at blocks 320, 325. FIG. 4 illustrates an example of a report format 400 that can be generated at block 340. At block 345, a user can refer to the generated report 108 to improve the fieldbus devices (e.g., H1 device 115) and is fully informed of the various features that the manufacturer of the devices offers. At block 350, the generated report 108 and the data in the exported file at block 335 are compared. If the report 108 and the live data pass comparison at block 350, then at block 355 the host system 106 is compliant with the H1 device 115, which can then be qualified. If the report 108 and the live data fail comparison at block 350, then at block 360 the host system 106 is not compliant with the H1 device 115, which is not qualified. The user can then make whatever adjustments to the host system 106 and the H1 device 115 as necessary to achieve compliance.

Technical effects include but are not limited to giving an end user a concise report of all foundation fieldbus features that corresponding DD files of the measurement device supports. The report enables a user to choose an efficient combination of devices by knowing the functionality and compatibility of various devices with the host system. The user can compare selection of various combinations and choose affordable combinations that meet all requirements of a given system. The host system can play a facilitating role to the end user in the foundation fieldbus device selection and planning process. The systems and methods described herein can also aid validation and device qualification teams to be more stringent during the validation and devices qualification phases that make the host system more robust against the qualified devices. As such, the device that is qualified by the host system is compliant with the host and the fieldbus standard. The user can then use the device with the compliant host and rely on the data for the control and monitor of the device.

While the invention has been described in detail in connection with only a limited number of example embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method for extracting and reporting a foundation fieldbus device description (DD) file (116) for device selection and data validation, the method comprising:
obtaining the DD file (116) for an intelligent field device (H1 device) (115);
extracting device information from the DD file (116);
reading live data generated by the H1 device (115); and
generating a report (108) including compliant values and functionality of the H1 device (115).

2. The method as claimed in Claim 1 wherein extracting device information from the DD file (116) comprises extracting supported and unsupported functionality of the H1 device (115).

3. The method as claimed in Claim 1 wherein extracting device information from the DD file (116) comprises extracting supported blocks.

4. The method as claimed in Claim 3 wherein extracting device information from the DD file (116) further comprises extracting function parameters of supported blocks.

5. The method as claimed in Claim 4 wherein the supported blocks include at least one of resource, transducer, function, custom, profiled custom and enhanced blocks.

6. The method as claimed in Claim 1 further comprising exporting the live data to an export file.

7. The method as claimed in Claim 6 further comprising comparing the compliant values from the report and the live data from the export file.

8. The method as claimed in Claim 7 wherein the compliant values and the live data include limits ranges and initial values.

9. The method as claimed in Claim 7 further comprising in response to a passing comparison of the live data, qualifying the H1 device (115).

10. The method as claimed in Claim 7 further comprising in response to a passing comparison of the compliant values, qualifying the H1 device (115).

11. A computer program product for extracting and reporting a foundation fieldbus device description (DD) file for device selection and data validation, the computer program product including a computer readable medium having instructions for causing a computer to implement a method as claimed in any one of claims 1 to 10.

12. A system for extracting and reporting a foundation fieldbus device description (DD) file for device selection and data validation, the system comprising:
a processor (205) configured to:
obtain the DD file (116) for an intelligent field device (H1 device) (115);
extract supported and unsupported functionality of the H1 device (115);
extract supported blocks and function parameters of the supported blocks;
read live data generated by the H1 device (115);
export the live data to an export file;
generate a report (108) including compliant values and functionality of the H1 device (115); and
compare the compliant values from the report (108) and the live data from the export file.

13. The system as claimed in Claim 12 wherein the processor (205) is further configured to in response to a passing comparison of the compliant values and the live data, qualify the H1 device (115).
